Europäisches Patentamt

European Patent Office

Office européen des brevets

(11) Veröffentlichungsnummer: **0 189 768**

**A2**

## (12) EUROPÄISCHE PATENTANMELDUNG

(21) Anmeldenummer: 86100311.9

(22) Anmeldetag: 11.01.86

(51) Int. Cl.⁴: **B 25 F 5/02**

(30) Priorität: 30.01.85 DE 3503024

(43) Veröffentlichungstag der Anmeldung:
06.08.86 Patentblatt 86/32

(84) Benannte Vertragsstaaten:
DE FR GB IT SE

(71) Anmelder: Kress-Elektrik GmbH + Co.
Elektromotorenfabrik
Hechinger Strasse
D-7457 Bisingen(DE)

(72) Erfinder: Kress, Willy
Breitenwasen 21
D-7457 Bisingen(DE)

(74) Vertreter: Otte, Peter, Dipl.-Ing.
Tiroler Strasse 15
D-7250 Leonberg(DE)

(54) Elektrisches Handarbeitsgerät.

(57) Elektrisch angetriebenes Handarbeitsgerät in länglicher Stabform mit einem vorderen Arbeitsbereich, einem zu diesem abgewandten, von der Hand des Benutzers erfaßten Haltebereich und einer hinteren Abschlußkappe, in dessen Innerem ein elektrischer Antriebsmotor sowie wiederaufladbare Akkuzellen (NC-Batterien) angeordnet sind, die über einen manuell betätigbaren Ein/Aus-Schalter mit dem Antriebsmotor verbunden werden. Am vorderen Endbereich des Geräts befindet sich ein durch beidseitigen Druck durch Haltelappen abnehmbarer Wechselkopf, der das Ansetzen einer Vielzahl unterschiedlicher Werkzeuge (Scheren, Messer, Schwingmembranen u.dgl.) ermöglicht, wobei sich unmittelbar an die Motorausgangswelle anschließend zwischen dem Motor und Wechselkopf ein nach Art eines Kreuzschleifengetriebes arbeitendes Umsetzergetriebe angeordnet ist.

./...

EP 0 189 768 A2

Fig.1

1953/ot/wi
18.12.1985


Firma Kress-elektrik GmbH + Co. Elektromotorenfabrik,
Hechinger Straße, 7457 Bisingen


## Elektrisches Handarbeitsgerät


### Stand der Technik


Die Erfindung geht aus von einem elektrischen Handarbeitsgerät
nach der Gattung des Hauptanspruchs. Solche oder ähnliche Handarbeitsgeräte sind bekannt und werden zunehmend, beispielsweise
im Werkstattbereich oder im Haushalt, eingesetzt.

Zu den bekannten Geräten dieser Art gehört beispielsweise ein handlicher Akku-Staubsauger, der einen elektrischen, ein Gebläse antreibenden Motor sowie eine bestimmte Anzahl von Akkuzellen aufweist, mit einem Handgriff für den Benutzer, von welchem auch ein
nach dem Loslassen wieder in die Ausgangsposition zurückspringender Ein/Aus-Schalter betätigt werden kann. Ein solcher netzungebundener
Akku-Staubsauger kann der zwischenzeitlichen Reinigung dienen und
stellt eine gewisse Arbeitserleichterung dar, da nicht für jeden Reinigungsvorgang ein größeres, netzgebundenes Gerät herangebracht
und angeschlossen zu werden braucht.

Nach Benutzung kann der Akku-Staubsauger in eine Halterung eingesetzt werden, die gleichzeitig ein Netzgerät zum Wiederaufladen der Akkuzellen, die üblicherweise NC-Batterien (Nickel-Cadmium-Batterien) sein können, so daß das Gerät gleichzeitig aufbewahrt ist und für seinen nächsten Einsatz wieder mit voll aufgeladenen Batterien bereit ist. Allerdings kann ein solches Gerät eine vorgegebene Mindestgröße nicht unterschreiten, da es sonst keine hinreichende Saugleistung aufbringen kann; außerdem muß in dem sich vom Handgriff ausgehend stark verbreiternden Gehäuse noch ein Staubbeutelbereich angeordnet werden. Der Drehantrieb des Elektromotors dient unmittelbar dem Antrieb des den Unterdruck erzeugenden Gebläses.

Es ist ferner bekannt, um aus der Vielzahl der verfügbaren Geräte nur einige zu nennen, die jeweils bestimmte Typen darstellen, im Haushaltsbereich ein elektrisch angetriebenes Messer vorzusehen, welches dem schnellen Zerteilen und Aufschneiden etwa von Fleisch und Geflügel dient und mit Zusatz-Scherblättern auch tiefgefrorene Nahrungsmittel zerteilen kann. Ein solches Messer benötigt jedoch einen Anschluß an eine vorhandene Steckdose, ist also nicht ortsungebunden und kann auch nur für den einen Anwendungszweck eingesetzt werden, da zwar die Messer zur Reinigung abgenommen werden können, mit dem verbleibenden Gerät aber immer wieder nur die gleichen Messer wieder zu verbinden sind, so daß das Gerät ausschließlich Schneid- oder Trennvorgänge bewirken kann.

Bekannt sind auch diverse Elektrohandgeräte, auch netzangetriebene Elektroscheren oder Trenngeräte, bei denen ein drehangetriebenes äußeres Rundmesser in Radform scherenartig gegen eine stationäre

/3

Gegenfläche läuft und an dieser anliegt, so daß in den Spalt das zu zertrennende Material eingeführt und zerschnitten werden kann. Neben der allgemeinen Unhandlichkeit und dem komplizierten, schweren mechanischen Aufbau ergibt sich als weiterer Nachteil die Netzgebundenheit solcher Geräte.

Der Erfindung liegt demgegenüber die Aufgabe zugrunde, ein elektrisches Handarbeitsgerät so auszubilden, daß es bei einfachem und insbesondere leichtgewichtigem Aufbau in gleicher Weise einfach und problemlos in netzungebundener Form zu handhaben ist, mit der Möglichkeit, das Gerät für eine Vielzahl von Arbeitsmöglichkeiten einzusetzen, wobei dennoch ein hohes, stets zufriedenstellendes Leistungsangebot zur Verfügung steht.

Vorteile der Erfindung

Das erfindungsgemäße Handarbeitsgerät löst diese Aufgabe mit den kennzeichnenden Merkmalen des Hauptanspruchs und hat den Vorteil umfassender Anwendungsmöglichkeiten, nicht nur im beruflich-professionellen Bereich, also etwa Werkstatt u.dgl., sondern insbesondere auch für den Haushalt, so daß den Hausfrauen ein leichtes und leicht zu handhabendes, stabförmiges Gerät für die verschiedensten Einsatzmöglichkeiten zur Verfügung gestellt wird, welches bei hoher Leistungsbereitschaft und Robustheit eine Vielzahl von auch heute noch schwierig zu meisternden Arbeiten übernehmen kann, beispielsweise das Zuschneiden auch fester Materialien oder Stoffe, wobei gerade bei solchen Schneidbewegungen, wenn sie lang andauern, sehr schnell Ermüdungs- und Krampferscheinungen in den Händen

/4

auftreten. Die vorliegende Erfindung findet daher auch ein bevorzugtes Anwendungsgebiet als wiederaufladbare Akkuschere mit hoher Leistung, mit unverwüstlichem Aufbau und jederzeit sofortiger Verfügbarkeit, da die Aufbewahrung des Geräts, wie für sich gesehen bei den eingangs genannten Handstaubsaugern schon bekannt, in einer gleichzeitig die Wiederaufladung der verwendeten Akkuzellen oder NC-Batterien bewirkenden Halterung vorgenommen wird.

Dabei ist von besonderem Vorteil, daß im Arbeitsbereich ein abnehmbarer Wechselkopf, der sich problemlos durch Entriegeln von Verrastungen abnehmen und durch Einrasten von Vorsprüngen wieder aufsetzen läßt, vorgesehen ist, der dann die diversen Arbeitsgeräte und Einsatzmöglichkeiten bietet.

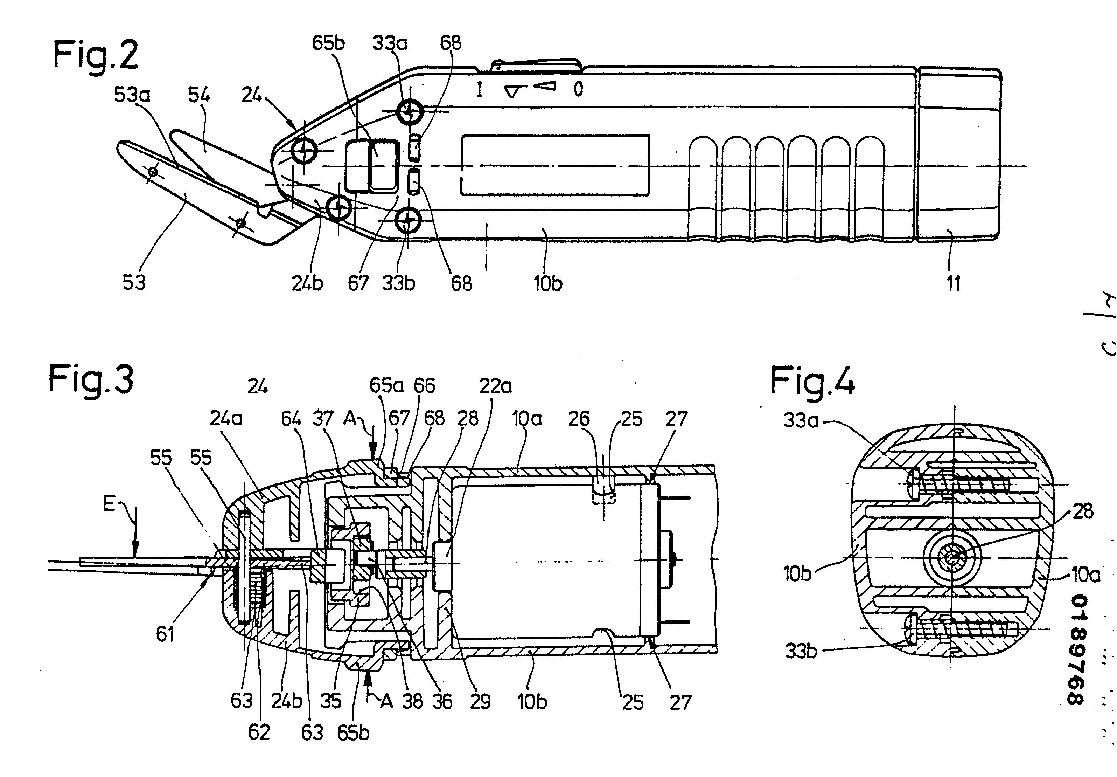

Das erfindungsgemäße elektrische Handarbeitsgerät, welches in der Darstellung der Fig. 2 in natürlicher Größe gezeigt ist, läßt sich durch diesen abnehmbaren Wechselkopf zu einer Vielzahl der verschiedensten Arbeiten einsetzen, von denen im folgenden lediglich einige genannt werden sollen. So kann durch Aufsetzen entsprechend ausgebildeter Arbeitswechselköpfe - bei der nachfolgenden Beschreibung des erfindungsgemäßen Ausführungsbeispiels ist dann allerdings ausschließlich / ein Scherkopf mit gegeneinander bewegbaren, eine Schneidkante bildenden Schneidblättern im einzelnen erläutert - das erfindungsgemäße Handarbeitsgerät als Nagelfeile, Nagelschere, Nagelschieber o.dgl., also auf dem Bereich der Maniküre aber auch der Hygiene, z.B. als Zahnbürste, Massagegerät u.dgl. eingesetzt werden, wobei gerade durch den translatorischen Antrieb, den das Gerät im Übergangsbereich bietet, eine Vielzahl von solchen Arbeitswechselköpfen aufgesetzt werden können, die im Endeffekt eine hin- und herverlaufende Bewegung zur Erledigung ihrer Aufgabe benötigen und einsetzen. Zu diesen Geräten gehören ferner Trimmgeräte und Haarschneidegeräte, Rasiergeräte, Langhaarschneider, Putzbürsten, verschiedene weitere Schereneinsätze, Haushaltsgeräte wie Messer mit verschiedenen Messereinsätzen, Schälgeräte für Früchte und Gemüse, Raspeln, aber auch solche Geräte, die für einen Einsatz den Antrieb einer Schwingmembran erforderlich machen, was ebenfalls durch die translatorische Bewegung im Abnahmebereich des erfindungsgemäßen Handarbeitsgeräts gewährleistet wird. Hierbei kann es sich um Minipumpen oder um Zerstäubergeräte, insbesondere auch für Flüssigkeiten, um Sprühgeräte zum Besprühen von Pflanzen und allgemein um den Antrieb von Pumpen handeln. Schließlich ist das erfindungsgemäße Handarbeitsgerät im Bürobereich, beispielsweise als Brieföffner, aber auch in der Werkstatt, etwa zum Antrieb von Stich- oder Laubsägen einsetzbar. Tatsächlich begrenzt sich der Einsatzbereich lediglich durch die Anzahl der zur Verfügung stehenden Arbeitswechselköpfen, die problemlos am vorderen Geräteteil angerastet werden können, an welchem über ein besonders einfaches, jedoch gleichzeitig robustes Umsetzergetriebe mit hohem Wirkungsgrad die ursprüngliche Rotationsbewegung des antreibenden Elektromotors in die hin- und herverlaufende Schwing-Antriebsbewegung umgesetzt wird.

Von besonderer Bedeutung bei vorliegender Erfindung ist ferner der kompakte einfache Aufbau und die spezielle, stabförmige Gehäuseform, die in ihrem hinteren Teil die dem Antrieb des Elektromotors dienenden NC-Batterien enthält und angrenzend zum Umsetzergetriebe unmittelbar den kräftigen antreibenden Gleichstrommotor für hohe Drehzahlen. Die überraschend hohe Leistung über längere Zeiträume, die das dennoch kompakte Arbeitsgerät von schlanker Stabform aufzubringen imstande ist, ist nicht zuletzt auf die kraftvolle Drehmomentabgabe des Antriebsmotors bei vergleichsweise sehr hohen Drehzahlen (Leerlaufdrehzahl z.B. 10.000 min$^{-1}$) zurückzuführen, so daß sich der Grundgedanke vorliegender Erfindung, ein Universalarbeitsgerät zu schaffen, welches für die verschiedensten Einsatzzwecke insbesondere auch im Haushalts-, Büro- und Küchenbereich, beim Nähen, Zuschneiden von Stoffen, Papier, Auslegware, Tapeten u. dgl., um nur einige Möglichkeiten im speziellen Anwendungsbereich des mit einem relativ zueinander bewegbaren Messerklingen aufweisenden Wechselarbeitskopf ausgestatteten Geräts zu nennen, gut realisieren läßt. Das erfindungsgemäße Handarbeitsgerät ist daher wegen seiner schlanken Form und seines nur geringen Gewichts insbesondere auch zur Anwendung für solche Arbeiten geeignet, die eher von Frauen vorgenommen werden; überhaupt gibt die Erfindung hier erstmals Frauen ein elektrisch angetriebenes Gerät hoher Leistung an die Hand, welches eine Vielzahl von täglich auftretenden, ermüdenden Handarbeiten ohne schweren körperlichen Einsatz erledigen kann, wobei durch die ständige Wiederaufladbereitschaft beim Ablegen des Geräts in eine geeignete, dazugehörende Halterung die Wiederaufladung jederzeit, auch bei Arbeitsunterbrechung, vorgenommen werden kann. Dabei ist von besonderem Vorteil die Ableitung der translatorischen Arbeitsbewegung formschlüssig über das Umsetzergetriebe aus der Drehbewegung, also unter Vermeidung schwächlicher, unter Last abbremsbarer Schwingmechaniken.

Durch die in den Unteransprüchen aufgeführten Maßnahmen sind vorteilhafte Weiterbildungen und Verbesserungen des im Hauptanspruch angegebenen Handarbeitsgeräts möglich. Besonders vorteilhaft ist die problemlose Zuordnung eines separaten weiteren Batterie-Packs, welcher am hinteren Bereich ohne Probleme angerastet werden kann und wobei hierdurch gleichzeitig die elektrischen Verbindungen bewirkt werden, da am hinteren Teil des Geräts auch der Eingangsstecker, der gleichzeitig eine Verbindung zu den Batterien als auch, unmittelbar durchlaufend, zum elektrischen Antriebsmotor herstellt, angeordnet ist.

Vorteilhaft ist weiterhin, daß das Umsetzergetriebe den Drehantrieb des Elektromotors in eine echte translatorische Bewegung umsetzt, also nicht nur in eine über einen vorgegebenen Drehwinkel verlaufende halb oder viertel rotatorische Drehbewegung. Das Umsetzergetriebe arbeitet vorzugsweise nach dem Grundprinzip eines sogenannten Kreuzschleifengetriebes und umfaßt einen exzentrisch an der Drehausgangswelle des Motors angeordneten Gleitstein, der in einer Ausnehmung eines beidseitig geführten Schwingelementes sitzt, welches dann mit vergleichsweise geringem Hub, aber hoher Hubzahl das jeweilige Arbeitswerkzeug des zugeordneten Wechselkopfs antreibt.

Dabei ist besonders vorteilhaft, daß, obwohl die vorderen Schneidmesser gegeneinander bewegbare Schneidkanten aufweisen, der Hub so bemessen ist, daß das Gerät auch gefahrlos sogar von Kindern gehandhabt werden kann, denn auch wenn man direkt bei laufendem Motor in den Schneidbereich greift, verhindert der geringe Hub von nur einigen mm, daß eine Verletzung auftritt; die Finger werden von den sich bewegenden Schneidmessern geradezu weggedrückt. Dennoch können auch dickere Papierstapel, Kartons u. dgl. geschnitten werden, weil die hohe Hubzahl und die Ausbildung der schlanken Messer aus federndem Messerstahl in Verbindung mit dem verwendeten Kreuzschleifengetriebe einen hohen Wirkungsgrad und einwandfreie Funktion sicherstellen.

Zeichnung

Ausführungsbeispiele der Erfindung sowie weitere Ausgestaltungen, vorteilhafte Merkmale und Verbesserungen sind in der Zeichnung dargestellt und werden in der nachfolgenden Beschreibung näher erläutert. Dabei versteht es sich, daß die in der Beschreibung erläuterten Ausführungsformen die Erfindung nicht einschränken, sondern lediglich besonders bevorzugte Realisierungsmöglichkeiten der Erfindung darstellen. Es zeigen:

Fig. 1 einen Längsschnitt durch eine bevorzugte Ausführungsform eines stabförmigen Universal-Handarbeitsgeräts, bei dem dargestellten Ausführungsbeispiel mit Wechselkopf für Schneidarbeiten (Akkuschere),

Fig. 2 das Gerät der Fig. 1 in einer Seitenansicht in natürlicher Größe, wiederum mit Schermesser aufweisenden Wechselkopf,

Fig. 3 einen Schnitt durch das Ausführungsbeispiel der Fig. 1 längs der Linie III-III in Fig. 1,

Fig. 4 einen Schnitt längs der Linie IV-IV der Fig. 1,

Fig. 5 einen Schnitt längs der Linie V-V der Fig. 1 und

Fig. 6 einen Schnitt längs der Linie VI-VI der Fig. 1, und die

Fig. 7a und 7b
ein bevorzugten Ausführungsbeispiel einer Halte- und gleichzeitig Wiederaufladeeinrichtung für das Universalgerät, welches an geeigneter Stelle über Dübel an einer Wand befestigt werden kann.

Beschreibung der Ausführungsbeispiele

Der Grundgedanke vorliegender Erfindung besteht darin, ein leicht zu handhabendes, kostengünstiges, netzungebundenes Universal-Handarbeitsgerät mit geringem Gewicht zu schaffen, welches in Verbindung mit einem jeweils zugeordneten, unterschiedlichen Arbeitswechselkopf (Werkzeugaufsatz) eine Vielzahl von Arbeiten in Werkstatt, Beruf, Hobby, Küche, Haushalt übernehmen kann und wegen seiner leichtgewichtigen Ausführung insbesondere auch einer längeren, ermüdungsfreien Handhabung durch Frauen und sogar Kindern zugänglich ist.

Im folgenden wird die Erfindung anhand eines konkreten, eine Akkuschere darstellenden Ausführungsbeispiels näher erläutert, wobei im folgenden auch nur noch ausschließlich auf ein Scherenelement als Arbeitswerkzeug im einzelnen eingegangen wird, aus Gründen der Klarheit und eines besseren Verständnisses; die weiter vorn gemachten Ausführungen verdeutlichen umfassend den Universalcharakter des erfindungsgemäßen Handarbeitsgeräts.

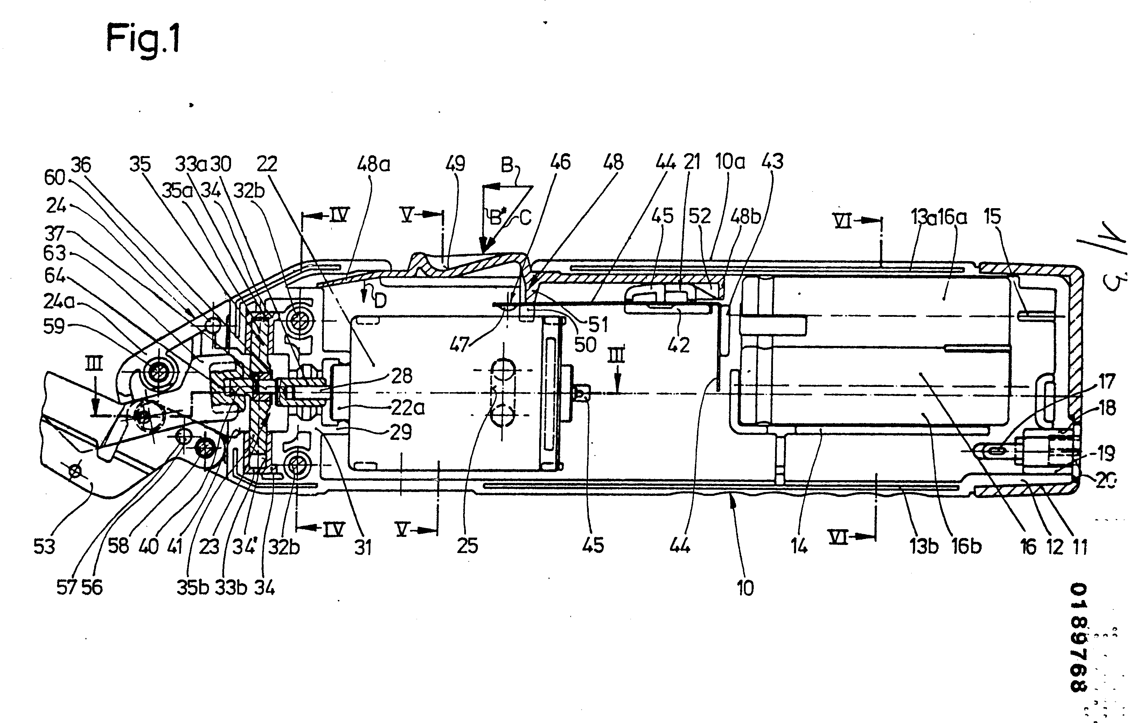

In Fig. 1 ist das längliche, schlanke, stabförmige Gehäuse 10 des Geräts im mittleren Bereich gebildet von vorzugsweise zwei in etwa gleichen Gehäusehalbschalen, vorzugsweise aus einem geeigneten zähen Kunststoffmaterial, mit einigen inneren Vorsprüngen, Rippen und Flanschen, auf die im folgenden, soweit erforderlich, noch eingegangen wird und die dazu dienen, in dem Gehäuse angeordnete Komponenten des Geräts zu positionieren, festzuhalten und einzuspannen. In der Darstellung der Fig. 1 ist die eine Gehäusehälfte 10a sichtbar,

/10

während die Draufsicht der Fig. 2 die andere Gehäusehälfte 10b von außen zeigt. wobei diese beiden Gehäusehälften, wenn man von der Arbeitsposition der Fig. 2 ausgeht, die inneren Elemente von beiden Seiten umschließen und einfassen. Der Gehäuseaufbau vervollständigt sich durch eine am hinteren Geräteende, also in der Zeichenebene der Fig. 1 von rechts noch aufgeschobene Abschlußkappe 11, die an einen aus beiden Gehäusehälften gebildeten zurückspringenden Flansch- und Boden-/bereich 12 durch das Aufschieben gleichzeitig auch aufrastbar oder einrastbar ist und an dieser Stelle im wesentlichen dazu dient, die beiden Gehäusehälften 10a, 10b fest miteinander zusammenzuhalten.

Zur Vermeidung von Fehlausrichtungen und Verschiebungen weist die in Fig. 1 gezeigte Gehäusehälfte 10a beidseitig an ihren der anderen Gehäusehälfte zugewandten Rändern schmale, rippenartige Ausricht- oder Positionierlippen 13a, 13b auf, die in entsprechende offene Randnuten des anderen Gehäuseteils eingreifen.

Eine zaunartige, rechteckig abgebogene innere Rippe 14 hält in Verbindung mit einer weiteren Rippe 15 im Gehäuseteil 10a den Batterie-Pack 16 fest, der vorzugsweise aus den bekannten, wiederaufladbaren NC-Batterien besteht, von denen zwei Batterien 16a, 16b von drei vorhandenen Batterien sichtbar sind, die zur Erzielung der entsprechenden Motorantriebsspannung in Reihe geschaltet sind und parallel zum Motor (nicht dargestellt) an Geräteeingangsklemmen 17 liegen, die Teil einer hinten in das Gerät in eine Gehäuseöffnung 18 einschiebbaren und durch beidseitig vorspringende, elastische Rastflächen verrastbaren Steckerbuchse 19 sind, die durch eine entsprechende Ausschnittsöffnung 20 in der Abschlußkappe 11 zugänglich ist.

/11

Weiter nach vorn, also in der Zeichenebene der Fig. 1 nach links, schließt sich der im folgenden noch genauer zu erläuternde Ein/Aus-Schalterbereich 21 an; der elektrische Antriebsmotor ist mit 22 bezeichnet, der Bereich des Umsetzergetriebes mit 23 und der Wechselkopf mit 24.

Die Lagerung des Antriebsmotors 22 kann so erfolgen, daß im Außenmantel des Motors Ausnehmungen oder Einschnitte 25 (vergl. auch Fig. 3) vorgesehen sind, in die, in diesem Fall hauptsächlich zur Verdrehsicherung, entsprechende Zapfen 26 von der Innenwandung der Gehäuseschalen eingreifen. Ferner kann der Motor an seinem hinteren Endbereich wie bei 27 gezeigt, mindestens teilweise über den Umfang von vorspringenden Ringwulsten der Gehäuseschalen gesichert sein, wobei ein zentraler Ringflansch 22a des Motors, durch welchen sich die Motorantriebswelle 28 erstreckt, von einem von beiden Gehäusehälften 10a, 10b gebildeten, nach innen vorspringenden Halte- und Lagerflansch 29 umfaßt ist. Dabei durchsetzt eine auf die Motorantriebswelle 28 aufgesetzte Hohlwelle 30 (vorzugsweise aus Metall und verdrehsicher aufgeschrumpft) berührungsfrei weitere nach innen vorspringende Flansch- und Rippenbereiche 31 beider Gehäuseteile, die im übrigen, wie bei 32a, 32b angedeutet, auch Aufnahmeöffnungen für zwei an dieser Stelle von außen durch das andere Gehäuseteil 10b (vergl. auch Fig. 2) eingesetzte Verbindungsschrauben 33a, 33b bilden, so daß die beiden Gehäuseschalen auch vorne sicher miteinander verbunden sind (die sichere Verbindung hinten wird, wie weiter vorn schon erwähnt, durch das vollständige Aufschieben und Anrasten der Abschlußkappe 11 bewirkt).

/12

Ein wesentlicher Gesichtspunkt vorliegender Erfindung besteht ferner darin, daß die weiter vorn schon erwähnten, sich im Umsetzergetriebebereich 33 befindenden Rippen und Vorsprünge 31 bei 33a, 33b (siehe Fig. 1) angedeutete Führungsbuchsen lagern, von denen im übrigen zur sicheren Verankerung Nasen 34 noch ausgehen, die gehäusefeste Rippenteile hintergreifen. Diese beidseitigen Führungsbuchsen 33a, 33b sind Teil des Umsetzergetriebes, welches die rotatorische Drehbewegung der Motorausgangswelle in die translatorische Bewegung umsetzt, die vom jeweiligen Werkzeug des aufgesetzten Wechselkopfs dann abgenommen und weiter verarbeitet wird. Die beiden, sich gegenüberliegenden Führungsbuchsen 33a, 33b bilden einander zugewandte und in dieser Richtung offene, vorzugsweise rechteckförmige Hohlräume 34, in welche ein Gleitelement 35 mit beidseitigen Flügeln 35a, 35b eingreift. Dieses Gleitelement 35 ist die angetriebene Komponente des Umsetzergetriebes und gleichzeitig dessen Endglied, wie gleich noch erläutert wird. Die auf die Motorausgangswelle 28 aufgesetzte buchsenförmige Hohlwelle 30 verfügt an ihrem anderen Ende über einen vorzugsweise einstückig angeordneten, exzentrischen Antriebszapfen 36, der in eine Öffnung eines Antriebsgleitsteins 37 eingreift. Der Antriebsgleitstein 37 ist vorzugsweise rechteckförmig, beispielsweise nach Art eines Parallelepipeds ausgebildet und sitzt seinerseits in einer rechteckförmigen Ausnehmung im angetriebenen Gleitelement 35, wobei diese Ausnehmung so beschaffen ist, daß sie in einer Richtung an den Gleitstein eng, vorzugsweise also nur mit sehr geringem Spiel anliegende Seitenwände bildet, in der anderen Richtung aber die den Antriebsgleitstein umfassenden Wände zu diesem jedenfalls in einem solchen Abstand gehalten sind, wie erforderlich ist, damit der Gleitstein den durch den Exzenterzapfen 36 vermittelten Hub in der einen Richtung jedenfalls, und zwar ohne Mitnahme des angetriebenen Gleitelements 35,durchführen kann. Notwendigerweise muß dann allerdings das angetriebene Gleitelement den senkrecht zu dieser Richtung vom Antriebsgleitstein durchgeführten Hub mitmachen, nämlich in der Richtung, in der die Wände der den Antriebsgleitstein aufnehmenden Ausnehmung eng an diesem anliegen, und dies ist die Bewegungsrichtung, die in der Darstellung der Fig. 1 von oben nach unten für das angetriebene Gleitelement 35 verläuft, welches daher in den weiter vorn erwähnten Führungsbuchsen 33a, 33b hin- und herschwingen kann. Am besten verständlich wird diese Art eines Umsetzergetriebes, wenn man die Darstellung der Fig. 1 mit der um $90^o$ versetzten Schnittdarstellung der Fig. 3 vergleicht; man erkennt bei dieser Darstellung nämlich, daß die den Antriebsgleitstein umfassende Ausnehmung 38 im angetriebenen Gleitelement 35 in dieser Ebene durch den Abstand ihrer Seitenwände zum Antriebsgleitstein diesem den Freiheitsgrad bietet, damit in dieser Ebene die durch den Exzenterzapfen 36 bewirkte Verschiebung des Antriebsgleitsteins ohne Mitnahme des angetriebenen Gleitelements erfolgt, so daß man auch gleich erkennen kann, daß sich also das angetriebene Gleitelement in der Zeichenebene der Fig. 3 zu dieser senkrecht hin- und herverschiebt. Durch die beidseitigen Führungsbuchsen 33a, 33b erhält das angetriebene Gleitelement seinen festen Sitz; der Hub des Gleitelements 35 bestimmt sich letztendlich durch die Exzentrizität des Exzenterzapfens 36 und einen entsprechenden Abstand müssen die Innenausnehmungen 34' der beidseitigen Führungen 33a, 33b auch aufweisen, damit das Gleitelement 35 sich in der Zeichenebene der Fig. 1 von oben nach unten frei bewegen kann.

/14

Der Aufbau eines solchermaßen ausgebildeten Umsetzergetriebes für rotatorische Drehbewegungen in eine translatorische Verschiebebewegung vervollständigt sich dann noch durch einen vorderen Mitnahmezapfen 40 am Gleitelement 35, an dem dann, zur Kraftübertragung, die jeweiligen angetriebenen Werkzeuge des Wechselkopfes angreifen. Der Antriebsmitnehmer 40 am Gleitelement 35 erstreckt sich durch eine von den beiden Gehäusehälften gebildete vordere Öffnung 41, wobei der diese Öffnung 41 bildende vordere Gehäuseabschlußhalbflansch einstückig von jeder Gehäusehalbschale ausgeht.

Ein weiteres wesentliches Merkmal vorliegender Erfindung ist die Ausbildung des Ein/Aus-Schaltbereichs 21, welcher, trotz Einhaltung wesentlicher Sicherheitsbedingungen, die gleich noch erläutert werden, überhaupt nur aus zwei beweglichen Teilen besteht.

Es ist in geeigneten Lagerrippen 42, 43 des Gehäuses gehalten, eine rechtwinklig abgebogene (metallische) Kontaktzunge 44 vorgesehen, die von Gehäuserippenteilen 42, 45 beidseitig umfaßt ist und durch den schon erwähnten Gehäusevorsprung 43 daran gehindert ist, nach hinten, in der Zeichenebene der Fig. 1 also nach rechts, wegzurutschen. Die elektrischen Verbindungen (nicht dargestellt) sind so getroffen, daß ein Motoranschluß 45 direkt an einer Batterieanschlußklemme und im übrigen auch an einer der Eingangsklemmen 17 der Steckerbuchse 19 anliegt, so daß zur Kontaktgabe und zum Einschalten des Motors lediglich der andere Pol geschaltet wird. Zu diesem Zweck ist die rechtwinklige Abbiegung 44a der, im übrigen aus einem federnden Material ausgebildeten Kontaktzunge mit dem anderen Batterieklemmenanschluß verbunden (und auch mit dem

/15

anderen Eingangsanschluß der Steckerbuchse 19), wobei der Endbereich der Kontaktzunge, wie bei 46 angedeutet, nach innen, in der Zeichenebene der Fig. 1 also nach unten abgebogen werden kann, so daß ein Kontaktstück 47 das Motorgehäuse bzw. den Mantel des Antriebsmotors berühren kann, wodurch, da dieser mit dem anderen Anschlußpol verbunden ist, die Kontaktgabe erfolgt.

Der Ein/Aus-Schaltbereich 21 ist so ausgebildet, daß das Universal-Handarbeitsgerät nicht versehentlich betätigt werden kann, beispielsweise nur durch Druck auf das bei 48 dargestellte Betätigungsschaltelement. Das Betätigungsschaltelement ist daher so angeordnet und in seiner Lagerung ausgebildet, daß eine definierte bewußt gerichtete Bewegung vom Benutzer durchgeführt werden muß, um das Gerät einzuschalten, d.h. um das Kontaktstück 47 an das Motorgehäuse anzudrücken. Zu diesem Zweck ist das eine allgemeine längliche Form aufweisende Betätigungsschaltelement 48 mit einer Betätigungsmulde oder einem Betätigungsgriff 49 ausgestattet, wo ein Finger oder der Daumen des Benutzers angreifen kann und ist so gelagert, daß zum Einschalten eine definierte Doppelbewegung, hierbei zunächst dem Pfeil B und anschließend dem Pfeil B* folgend auf das im übrigen leichtgängig gelagerte und bewegbare Betätigungselement 48 ausgeübt werden muß, wobei die beiden Bewegungen B und B* sich auch durch die kombinierte Bewegung in Richtung des schrägen Verlaufs entsprechend dem Pfeil C ersetzen lassen. Der Grund hierfür liegt in folgendem. Es ist ein innerer Gehäuseanschlag 50 vorgesehen, der so angeordnet ist (mit Bezug auf die Kontaktzunge 44 im übrigen so tief liegt),daß diese über den Anschlag 50 hinweggedrückt werden kann, jedoch nicht das Betätigungselement 48 mit seinem Kontaktzapfen 51, der, im übrigen beidseitig für beide Gehäusehalbschalten gültig, in der in der Fig. 1 dargestellten Position des Betätigungselements 48 dessen Eindrücken, also dessen Bewegung in der Zeichenbene nach unten, absolut blockiert.

Dabei ist das Betätigungselement jeweils endseitig und mindestens in diesen Bereichen federnd ausgebildet, umfaßt also eine vordere Federzunge 48a und einen hinteren Rückstell-Federmechanismus 48b, der stets versucht, das Betätigungselement 48 in die in der Fig. 1 dargestellten Position zurückzuziehen, also in der Zeichenebene nach rechts zu bewegen. Zu diesem Zweck ist der hintere Federmechanismus 48b so ausgebildet, daß er sich blattfederartig senkrecht zur Zeichenebene erstreckt und oben und unten Gehäuseansätze 52 hintergreift. Der vordere Federbereich 48a ist ebenfalls blattfederartig ausgebildet und ermöglicht eine elastische Nachgiebigkeit in Richtung des Pfeils D, so daß ein Eindrücken, in der Zeichenebene der Fig. 1 nach unten, des Federelements schließlich möglich ist.

Die Funktion des Ein/Aus-Schaltbereichs 21 ist daher so, daß man zunächst durch Angreifen an der Griffmulde 49 das Betätigungselement nach links in der Zeichenebene, also nach vorn in Richtung auf den Wechselkopf schiebt, bis der Druckbereich oder Druckzapfen 51 am Betätigungselement 48 vom Anschlag 50 freikommt und anschließend dieses gegen die rückstellende Wirkung des vorderen Federungsbereichs 48a, hierbei der Bewegung zunächst des Pfeils B und anschließend des Pfeils B* folgend, eindrückt, so daß es dann zu einer problemlosen Kontaktgabe zwischen der Kontaktzunge 44 und dem Motorgehäuse kommt, weil der Druckzapfen 51 in der vorderen Betätigungsposition

/17

des Elements 48 die Kontaktzunge zur Kontaktgabe niederdrücken kann. Läßt der Druck des Benutzers in der Griffmulde 49 nach, dann ergibt sich eine selbständige Rückstellung gleichzeitig durch die abhebende Wirkung des vorderen Federbereichs 49a und das Rückziehen des Betätigungsschaltelements 48 durch den hinteren Federungsbereich 48b.

Vorzugsweise besteht das gesamte Betätigungsschaltelement aus einem einstückigen Kunststoffteil, wobei die Federungsbereiche durch entsprechende Materialverdünnung gebildet sind; sie können, falls gewünscht, natürlich auch durch das Einlegen geeigneter metallischer Federteile in die Spritzgußform gebildet werden.

Mit Vorteil sind im übrigen auch der überwiegende Teil der Komponenten des Umsetzergetriebes aus geeignetem Kunststoff aufgebaut, wodurch sich leichte Gleitfähigkeit mit einfachem, verschleißfreiem Aufbau und hohem Wirkungsgrad des Getriebes verbinden läßt. Aus Kunststoff bestehen beispielsweise der Antriebsgleitstein, das angetriebene Gleitelement mit seinen beidseitigen unteren und oberen Führungshülsen 33a, 33b sowie der am Gleitelement einstückig ausgebildete Mitnehmerzapfen 40; die den Exzenterzapfen 46 tragende Antriebshohlwelle 30 kann dabei aus Metall bestehen.

Die hintere Abschlußkappe 11 erfüllt einen weiteren Zweck. In der Stirnfläche der Abschlußkappe befinden sich Ausnehmungen und Durchbrechungen (nicht dargestellt), zusätzlich zu der Öffnung 20, durch welche die Steckerbuchse 19 zugänglich ist. Diese Durchbrechungen finden, was in den Zeichnungen ebenfalls nicht dargestellt ist, eine Fortsetzung in entsprechenden äußeren Längsausnehmungen der beiden Gehäusehalbschalen und auf diese Weise ist es möglich, falls erwünscht, hinten an das in Fig. 2 in natürlicher Größe dargestellte
Gerät nochmals ein Zusatzgehäuseteil von etwa der Länge üblicher
bzw. jeweils vorgesehener zusätzlicher Akkuzellen oder NC-Batterien
aufzuschieben und zu verrasten, wobei gleichzeitig mit der Steckerbuchse 19 in eine Kontaktwirkverbindung tretende Kontaktbereiche an
diesem zusätzlichen Gehäuseteil (nicht dargestellt) angeordnet sind,
mit der hierdurch gebotenen Möglichkeit, mit diesem zusätzlichen Gehäuseteil nochmals mindestens die gleiche Anzahl von Antriebsbatterien vorzusehen,   die dann sinnvollerweise zu den im Gerät vorhandenen
Batterien so parallelgeschaltet werden, daß sich die doppelte Stromstärke, je nach Bedarf, ergibt. In erster Linie wird hierdurch natürlich eine längere, ununterbrochene Arbeitsdauer sichergestellt; es
wird hierdurch aber auch möglich, Stromspitzen, die bei Belastung
des Elektromotors auftreten, aufzufangen und sicherzustellen, daß
auch schwerere Arbeiten problemlos durchgeführt werden können.

Weitere wesentliche Gesichtspunkte vorliegender Erfindung betreffen
die Wechselkopfmechanik, auf die im folgenden eingegangen wird.

Bei dem dargestellten Ausführungsbeispiel enthält der auf das Handarbeitsgerät in der in den Zeichnungen dargestellten Position aufgesteckte Wechselkopf Lagermittel für eine Werkzeugschere und besteht
aus zwei, sich nach vorn verjüngend, also zulaufenden Kopfhalbschalen
24a, 24b, die, wie es sich versteht, für das spezielle Ausführungsbeispiel natürlich so ausgebildet sind, daß sie die Schneidwerkzeuge
so lagern, daß diese den Antrieb vom Mitnehmerzapfen 40 übernehmen
können.

Die Schneidwerkzeuge sind, wie am besten der Darstellung der Fig. 2 entnommen werden kann, gebildet von einem stationär gehaltenen Messer- oder Scherenteil 53, dabei eine Schneidkante bei 53a bildend und einem auf die stationäre Schneidkante arbeitenden beweglichen Messer- oder Scherenteil 54, die vorzugsweise beide aus entsprechend hochwertigem Stahl bestehen und so in kraftvoller und wirkungsvoller Weise zur Bewirkung von Schneid- und Trennvorgängen zusammenarbeiten. Das stationäre Messer ist dabei, wie die Fig. 1 und 3 am besten zeigen, in der Wechselkopfhälfte 24a zunächst über einen beide Wechselkopfschalenhälften in geeigneten Ausnehmungen durchsetzenden Lagerbolzen 55 gehalten und weist mindestens noch einen zweiten Befestigungspunkt auf, in diesem Fall gebildet durch einen gehäusefesten Zapfen 56, der eine entsprechende Aufnahmeöffnung 57 am unteren, stationären Messer 53 durchsetzt. Es kann dann noch eine weitere Öffnung 58 im unteren Messer vorgesehen sein, die eine von zwei in dieser Wechselkopfhälfte angeordnete Aufnahmebohrungen 59 für die Aufnahme von die beiden Wechselkopfhälften zusammenhaltenden Schrauben umgibt. Daher wird das untere Messer 53 durch das Aufsetzen und feste Verbinden der beiden Wechselkopfhälften unverrückbar gehalten, wobei es sich versteht, daß die Wechselkopfhälften zur sicheren Positionierung und Ausrichtung über entsprechende Aufnahmeöffnungen und Eingriffszapfen 60 noch verfügen können.

Das obere, bewegliche Messer ist zunächst, und im übrigen ausschließlich von dem gleichen Lagerzapfen 55 verschwenkbar gehalten, der auch das stationäre Messer 53 durchsetzt, wobei dieses letztere, wie Fig. 3 am besten zeigt, von seinem Lagerbereich ausgehend mit seiner Schneide bei 61 angedeutet, auf die andere Seite des beweglichen

/20

Messers wechselt. Hierdurch ist es möglich, bei 62 eine Andruckfeder 63 für das bewegliche Messer 54 anzuordnen, wobei der Angriffsbereich dieser Andruckfeder 63 in der Zeichenebene der Fig. 3 rechts vom Schwenkpunkt dieser Feder ist, so daß diese entsprechend dem Pfeil E ständig in Richtung auf das stationäre Messer gedrückt und vorgespannt ist. An seinem inneren, hochgezogenen Endbereich 63 umfaßt das bewegliche Messer dann gabelartig einen U-förmig ausgebildeten Mitnehmerteil 64, der vorzugsweise aus Kunststoff besteht und mit seiner U-Öffnung, wie in Fig. 1 gezeigt, beidseitig den Mitnehmer-Antriebszapfen 40 des Gleitelements 35 umfaßt. Das bewegliche Messer 54 macht daher durch diese formschlüssige Verbindung die schnellen Hubbewegungen des Gleitelements mit, wobei jedoch im aufeinandergleitenden Schneidenbereich der beiden Messer nur, pro Hub gesehen, sehr geringe Verschiebungen auftreten, entsprechend dem Entwurf dieses Scheren-Wechselkopfes, so daß das mit einem solchen Wechselkopf ausgerüstete Universal-Handarbeitsgerät im Gebrauch völlig ungefährlich ist - selbst bei angepreßten Fingern ergibt sich keine Einschneidwirkung - andererseits stellt der sehr schnelle Hub aber sicher, daß auch feste Materialien im schnellen durchlaufenden Schnitt problemlos getrennt werden können.

Ein weiteres wesentliches Merkmal vorliegender Erfindung besteht darin, daß zum problemlosen Austausch des jeweiligen Arbeits-Wechselkopfes an diesen nach hinten über die beidseitige Halbschalenbegrenzung hinaus zungenartige Ansätze 65a, 65b vorgesehen sind, die mit einem abgewinkelten inneren Teil 66 Gehäusequerrippen 67 (jeweils beidseitig) zunächst unter- und dann hintergreifen, und zwar mit widerhakenähnlichen Vorsprüngen 68, so daß der jeweilige Arbeits-

/21

wechselkopf sicher am vorderen Gehäuseende gehalten ist. Zur weiteren präzisen Halterung gehen von der inneren Stirnfläche, also in Richtung auf / das Gerätegehäuse gerichtet, zapfenähnliche Vorsprünge noch von jedem Wechselkopf aus, die in entsprechende Zentrieröffnungen so eingreifen, daß der Wechselkopf auch nur in der einen einzigen richtigen Position angesetzt und dann durch das anfängliche Zurücktreten und dann wieder Herausspringen seiner Arretierzungen 65a, 65b sicher arretiert werden kann.

Zum Lösen des Wechselkopfes braucht dann lediglich noch, wie in Fig. 3 gezeigt, auf die beiden erhöhten Zungenbereiche, wie die Pfeile A zeigen, gedrückt zu werden, wodurch sich bei eingerückt gehaltenen Zungen, der Wechselkopf vom Restarbeitsgerät axial leicht abziehen läßt.

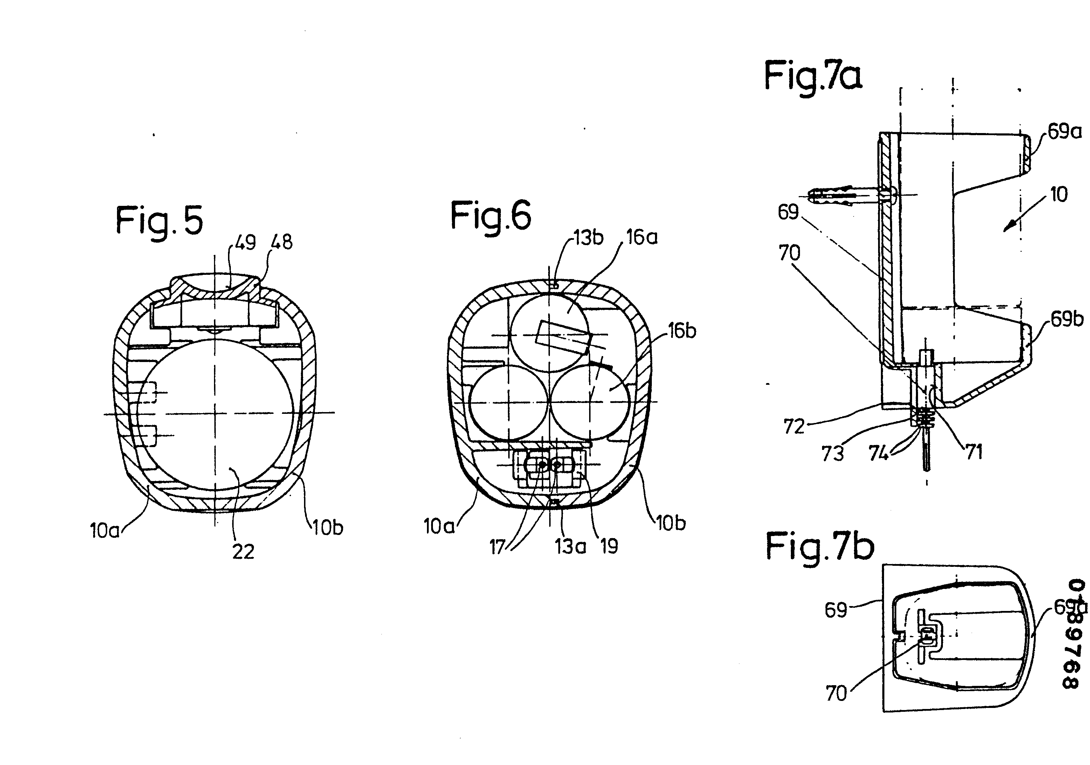

Das Gerät vervollständigt sich schließlich noch durch eine geeignete Halterung zur gleichzeitigen Wiederaufladung, vorzugsweise Wandhalterung, wie sie in den Fig. 7a, 7b in einer Längsschnittansicht und in Draufsicht dargestellt ist.

Bei dieser Halterung, die einen Hauptrahmen 69 mit zwei das bei 10 eingesetzte Gerät umfassenden Ringteilen 69a und 69b bildet, ist von Bedeutung die lösbare Anordnung des Ladesteckers 70, der in eine untere Öffnung 71 der Fassung 69 von unten bis zu einem vorgegebenen Anschlag einschiebbar ist, wobei eine zurückbiegbare Zunge 72 mit einem Vorsprung 73 in eine der Rillen 74 am Stecker 70 eingreift. Es ist daher möglich, entweder den vom hier nicht dargestellten Ladegerät kommenden Stecker 70 mit der Halterung zu verbinden, oder,

/22

was je nach Ausbildung und Dimensionierung, insbesondere elektrischer Ausbildung des Ladegerätes von Bedeutung sein kann, den Stecker auch von der Halterung 69 zu trennen und ständig mit der Steckerbuchse 19 zu verbinden, so daß das Arbeitsgerät, ohne oder ohne allzu starke Belastung der Stromversorgungsbatterien, sozusagen vom Netz gespeist betrieben werden kann.

Alle in der Beschreibung, den nachfolgenden Ansprüchen und der Zeichnung dargestellten Merkmale können sowohl einzeln als auch in beliebiger Kombination miteinander erfindungswesentlich sein.

Firma Kress-elektrik GmbH + Co. Elektromotorenfabrik,
Hechinger Straße, 7457 Bisingen

Patentansprüche

1. Elektrisches Handarbeitsgerät, mit einem Arbeitsbereich, einem zu diesem abgewandten, von der Hand des Benutzers erfaßten Haltebereich, einem elektrischen Antriebsmotor sowie wiederaufladbaren Akkuzellen (NC-Batterien), die über einen manuell betätigbaren Ein/Aus-Schalter mit dem Antriebsmotor verbindbar sind, dadurch gekennzeichnet, daß der die längliche Stabform des Gerätegehäuses (10) abschließende Arbeitsbereich von einem abnehmbaren Wechselkopf (24) für die Anordnung mindestens eines Arbeitswerkzeugs (Schere, Klingen 53, 54) gebildet ist und daß angrenzend an den Arbeitsbereich im Übergang zwischen dem Drehausgang des Antriebsmotors (22) und der jeweiligen Antriebsaufnahme des Wechselkopfes (24) ein einen Exzenter (30, 36) umfassendes Umsetzergetriebe (23) von rotatorische auf translatorische Bewegung angeordnet ist.

2. Gerät nach Anspruch 1, dadurch gekennzeichnet, daß beidseitige, aufeinander ausgerichtete Gehäusehalbschalen (10a, 10b) im hinte-

/2

ren Teil von einer aufgeschobenen und angerasteten Abschlußkappe (11) und im vorderen Teil von mindestens einem Verbindungs-element (Schrauben 32a', 32b') zusammengehalten sind und daß im Gehäuseinneren, durch stationäre Gehäuselängs- und -querrippen positioniert und gehalten ein die wiederaufladbaren Akkuzellen oder NC-Batterien aufnehmender Bereich (16), ein mittlerer Ein/Aus-Schaltbereich (21) und an diesen nach vorne angrenzend der Antriebsmotor (22) angeordnet sind, dessen Ausgangsdrehwelle (28) mit dem Umsetzergetriebe in Wirkverbindung steht.

3. Gerät nach Anspruch 1 oder 2, dadurch gekennzeichnet, daß auf die Antriebswelle (28) des von Gehäuseringflanschen (27, 29) und Vorsprüngen (26) ortsfest und verdrehsicher gehaltenen Motors (22) eine Hohlwelle (64) mit einem Exzenterzapfen (36) drehfest aufgesetzt ist.

4. Gerät nach einem der Ansprüche 1 bis 3, dadurch gekennzeichnet, daß das Umsetzergetriebe nach Art eines Kreuzschleifengetriebes ausgebildet ist und ein angetriebenes Gleitelement (35) umfaßt, welches mit beidseitigen Gleitflügeln in ortsfesten Führungsbuchsen (33a, 33b) gelagert ist und eine zentrale Ausnehmung (38) aufweist zur Aufnahme eines mit dem Exzenterzapfen (36) drehbar verbundenen Antriebsgleitsteins (37).

5. Gerät nach Anspruch 4, dadurch gekennzeichnet, daß die den Antriebsgleitstein (37) aufnehmende Ausnehmung (38) in einer Richtung an dem Antriebsgleitstein eng anliegende Wandbereiche und in der anderen Richtung einen dem Exzenterhub entsprechenden Ab-

/3

stand einhaltende Wandbereiche aufweist derart, daß das angetriebene Gleitelement lediglich in einer Richtung eine der Exzenterwirkung entsprechende Hubbewegung durchführt, wobei die beidseitigen, am Gehäuse befestigten bzw. mit diesem einstückig ausgebildeten Führungsbuchsen (33a, 33b) eine Geradführungswirkung auf das angetriebene Gleitelement ausüben.

6. Gerät nach Anspruch 4 oder 5, dadurch gekennzeichnet, daß am angetriebenen Gleitelement in Richtung auf den abnehmbaren Wechselkopf (24) ein Antriebmitnahmezapfen (40) vorzugsweise einstückig angeordnet ist.

7. Gerät nach einem der Ansprüche 1 bis 6, dadurch gekennzeichnet, daß der aus zwei beweglichen Teilen bestehende Ein/Aus-Schaltbereich (21) eine mit dem einen Pol der Versorgungsbatterien verbundene Kontaktzunge (44) aufweist, die über Gehäusequer- und -längsrippen (42, 43, 45) ortsfest gehalten und von einem länglichen Betätigungsschaltelement (48) zur Bewirkung einer Kontaktgabe auf ein zugeordnetes Gegenkontaktelement (Gehäuse des Antriebsmotors 22) drückbar ist.

8. Gerät nach Anspruch 7, dadurch gekennzeichnet, daß aus Sicherheitsgründen zur Erzielung einer Kontaktgabe durch das Betätigungsschaltelement dieses in einer ersten vorgegebenen und nachfolgend in einer zweiten Richtung (B, B*) bzw. in einer aus diesen beiden Richtungen resultierenden Kombinationsrichtung (C) bewegbar ist, wobei bei Betätigungen lediglich in eine dieser Richtungen in keinem Fall eine Kontaktgabe erfolgt.

/4

9. Gerät nach Anspruch 7 oder 8, dadurch gekennzeichnet, daß das Betätigungsschaltelement ein flächiges Längsteil ist mit einem vorderen Federungsbereich (Federzunge 48a) und einem hinteren, der Rückstellung dienenden Federungsbereich (Blattfeder 48b), mit einer solchen Lagerung durch gehäusestationäre Rippen und Anschlagbereiche (45, 52; Gehäuseinnenwandbereiche), daß ohne externe Einwirkung stets eine vorgegebene Ausgangsposition eingenommen wird.

10. Gerät nach Anspruch 9, dadurch gekennzeichnet, daß am Betätigungsschaltelement ein Druckzapfen oder Drucksteg (51) angeordnet ist zur Einwirkung auf die Kontaktzunge (44), der in der Ausgangsposition gleichzeitig so an einem gehäusefesten Anschlag (50) anliegt, daß das Betätigungsschaltelement zunächst durch eine Schiebebewegung aus der Ausgangsposition nach vorn und anschließend nach innen und erst hierdurch gleichzeitig zur Einwirkung auf die Kontaktzunge (44) bewegbar ist.

11. Gerät nach einem oder mehreren der Ansprüche 1 bis 10, dadurch gekennzeichnet, daß die hintere Abschlußkappe (11) axiale Durchbrechungen und Aufnahmeschlitze aufweist, die sich teilweise in rinnenartigen Verlängerungen mindestens einer Gehäusehalbschale (10a, 10b) fortsetzen, derart, daß ein weiteres, zusätzliche Antriebsbatterien (NC-Batterien) enthaltendes Gehäuseteil auf das hintere Ende des Geräts aufgeschoben und aufgerastet werden kann, mit gleichzeitiger Kontaktgabe durch aufeinander ausgerichtete Stecker/Buchsen.

12. Gerät nach einem der Ansprüche 1 bis 11, dadurch gekennzeichnet, daß der abnehmbare Wechselkopf axiale, in Führungsöffnungen der Gerätestirnfläche einschiebbare Positionierstangen aufweist oder diese umgekehrt an der Gehäusestirnfläche angeordnet sind und daß am Wechselkopf beidseitig der Arretierung durch Hintergreifen dienende Haltelappen (65a, 65b) angeordnet sind, die mit Teilbereichen (66) gehäusefeste Rippen (67) hintergreifen, wobei zum Lösen des jeweiligen Wechselkopfes auf entgegengesetzte Vorsprünge der Haltelappen eine beidseitige Druckwirkung auszuüben ist.

13. Gerät nach einem der Ansprüche 1 bis 12, dadurch gekennzeichnet, daß am Wechselkopf (24) eine mit einem beweglichen Werkzeugteil verbundene Aufnehmeröffnung angeordnet ist, in welche der Mitnehmerzapfen (40) des Gleitelements (35) eingreift.

14. Gerät nach einem der Ansprüche 1 bis 13, dadurch gekennzeichnet, daß der Wechselkopf aus zwei sich nach vorn verjüngenden Halbschalen (24a, 24b) gebildet ist, die zwischen sich zur Bildung eines Scherenwerkzeugs ein stationäres Messer (53) mit Schneidkante (53a) und ein bewegliches Messer (54) lagern, welches um einen festen, von einem Zapfen (55) gebildeten Schwenkpunkt und unter der Wirkung einer Vorspannungsfeder (63) gegen das stationäre Messer gepreßt beweglich gelagert ist und an seinem Endbereich die von einem U-förmigen Aufnahmeklotz (64) gebildete Aufnahmeöffnung zum Eingriff in den Mitnahmezapfen (40) aufweist.

15. Gerät nach einem oder mehreren der Ansprüche 1 bis 14, dadurch gekennzeichnet, daß die am hinteren Endbereich angeordnete und

/6

**0189768**

durch einen Ausschnitt in der Abschlußkappe (11) zugängliche Steckerbuchse (19) beim Einsetzen in eine Haltestruktur (69) zur Kontaktgabe mit dem zugeordneten Stecker (70) des Ladegeräts gelangt, wobei zur parallelen Stromversorgung über das Netzgerät der Stecker (70) des Ladegeräts aus der Halterung (69) entnehmbar und unmittelbar mit dem Gerät verbindbar ist.

Fig.1

0189768

Fig.2

Fig.3

Fig.4

# Fig.5

# Fig.6

# Fig.7a

# Fig.7b